# EUROPEAN PATENT APPLICATION

(11) **EP 4 685 993 A1**
(43) Date of publication of application: **28.01.2026**
(21) Application number: 24880162.3
(22) Date of filing: 17.10.2024
(51) Int. Cl.: H01M 50/59, H01M 50/588, H01M 50/502, H01M 50/507

(54) **BATTERY MODULE AND BATTERY PACK INCLUDING SAME**

(30) Priority: 20.10.2023 KR 20230140912
(71) Applicant: LG Energy Solution, Ltd., Seoul 07335 (KR)
(72) Inventor: AN, Hyuk, Daejeon 34122 (KR)
(74) Representative: BCKIP Part mbB
(86) International application number: PCT/KR2024/015829
(87) International publication number: WO 2025/084825

(57) **Abstract**

A battery module includes a battery cell stack including a plurality of battery cells, a busbar frame located on at least one surface of the battery cell stack, and at least two busbars located on the busbar frame. The busbar frame includes at least one insulation rib protruding between a first busbar of the at least two busbars and an adjacent second busbar of the at least two busbars. The insulation rib includes a plurality of protruding portions, the plurality of protruding portions be located on a first surface of the busbar frame, the first surface facing away from the first busbar, and the plurality of protruding portions protruding toward the second busbar.

## Description

### [Technical Field]

### CROSS-REFERENCE TO RELATED APPLICATION(S)

This application claims benefit of priority based on Korean Patent Application No. 10-2023-0140912 filed in the Korean Intellectual Property Office on October 20, 2023, the entire contents of which are incorporated herein by reference.

The present application relates to a battery module and a battery pack including the same, and more particularly, to a battery module including a busbar frame with improved insulation performance between busbars, and a battery pack including the same.

### [Background Art]

As development of technologies and demands for mobile devices are increased, there is a rapidly increasing demand for secondary batteries as energy sources. The secondary battery is attracting lots of interest as an energy source for a power device such as an electric bicycle, an electric vehicle, and a hybrid electric vehicle as well as a mobile device such as a mobile phone, a digital camera, a notebook computer, and a wearable device.

As currently commercially available secondary batteries, there are a nickel cadmium battery, a nickel hydrogen battery, a nickel zinc battery, a lithium secondary battery, and the like. Among these batteries, in comparison with the nickel-based secondary battery, the lithium secondary battery causes almost no memory effect and thus is freely charged or discharged. Further, the lithium secondary battery has a very low self-discharge rate and a high energy density, and thus the lithium secondary battery is in the limelight.

The lithium secondary battery mainly uses lithium-based oxide and carbon materials for a positive electrode active material and a negative electrode active material. The lithium secondary battery includes: an electrode assembly including a positive plate and a negative plate that are respectively coated with the positive electrode active material and the negative electrode active material and disposed with a separator interposed therebetween; and a battery casing configured to seal and accommodate the electrode assembly together with an electrolyte.

In general, the lithium secondary batteries may be classified, depending on shapes of exterior materials, into a can-type secondary battery in which the electrode assembly is embedded in a metal can, and a pouch-type secondary battery in which the electrode assembly is embedded in a pouch configured by an aluminum laminated sheet.

In the case of a secondary battery used for a small-scale device, two or three cells are disposed. In contrast, in the case of a secondary battery used for a middle-scale or large-scale device such as a vehicle, a battery module made by electrically connecting a plurality of battery cells is used. The battery module has an improved capacity and an increased output because the plurality of battery cells constitutes a battery cell stack by being connected to each other in series or in parallel. In addition, one or more battery modules may be mounted together with various types of control and protection systems such as a battery management system (BMS), a cooling system, and the like, thereby constituting the battery pack.

When the battery cell stack is configured by using the plurality of battery cells and the single battery module is configured by using the battery cell stacks, the electrical connection between the plurality of battery cells is implemented by busbars. Specifically, the busbars may be mounted on a busbar frame that is an insulator, and electrode leads of the battery cells may be bent after passing through slits formed in the busbar frame and then joined to the busbars.

In this case, a plurality of busbars, such as busbars having different polarities or terminal busbars to be connected to the outside, which are not electrically connected to each other, may be disposed on the single busbar frame and adjacent to each other. In this case, insulation performance between the busbars may be taken into account. That is, sufficient insulation needs to be ensured between the busbars that are not electrically connected to one another. To this end, a sufficient creepage distance (creepage) needs to be ensured. However, as a capacity and an output increase, a value of the required creepage distance increases, and a design for ensuring the sufficient creepage distance is required in a situation in which there is a constraint to a size of a space in which components are mounted.

### [Disclosure]

### [Technical Problem]

The present disclosure attempts to provide a battery module, in which a sufficient creepage distance between busbars is ensured in a limited space to improve insulation performance, and a battery pack including the same.

The objects to be solved by the present application are not limited to the above-mentioned objects, and other objects, which are not mentioned above, may be clearly understood by those skilled in the art from the present specification and the accompanying drawings.

### [Technical Solution]

A battery module according to an embodiment of the present application includes a battery cell stack including a plurality of battery cells, a busbar frame located on at least one surface of the battery cell stack, and at least two busbars located on the busbar frame, in which the busbar frame includes at least one insulation rib protruding between a first busbar of the at least two busbars and an adjacent second busbar of the at least two busbars, and the at least one insulation rib includes a plurality of protruding portions, the plurality of protruding portions being located on a first surface of the busbar frame, the first surface facing away from the first busbar, and the plurality of protruding portions protruding toward the second busbar.

The busbar frame may be made of an insulating material, and the at least one insulation rib may be integrated with the busbar frame by injection molding.

A direction in which the at least one insulation rib protrudes may be a first direction perpendicular to the first surface of the busbar frame.

A direction in which the plurality of protruding portions protrude may be a second direction perpendicular to the first direction and parallel to the first surface of the busbar frame.

At least one of the at least one insulation rib may be located adjacent to the first busbar located at an outermost side of the busbar frame among the at least two busbars mounted on the busbar frame.

A creepage distance of the first surface on which the plurality of protruding portions are located may be two or more times a creepage distance of a surface on which the plurality of protruding portions are not located.

A length by which the at least one insulation rib protrudes may be longer than a thickness of each of the at least two busbars in a direction in which the at least one insulation rib protrudes.

The plurality of protruding portions may be spaced apart from one another to define a concave-convex structure.

A maximum width of the at least one insulation rib including the plurality of protruding portions may be smaller than a spacing distance between the first busbar and the second busbar.

A battery pack according to another embodiment of the present invention includes the above-mentioned battery module.

According to the battery module and the battery pack including the same according to the embodiments, it is possible to ensure the sufficient creepage distance between the busbars in the limited space, thereby improving the insulation performance.

The effects of the present application are not limited to the above-mentioned effects, and other effects, which are not mentioned above, may be clearly understood by those skilled in the art from the present specification and the accompanying drawings.

### [Description of the Drawings]

FIG. 1 is an exploded perspective view illustrating a battery module according to an embodiment of the present disclosure.
FIG. 2 is a view illustrating a busbar frame on which a busbar of a battery module in FIG. 1 is mounted.
FIG. 3 is an exploded perspective view of FIG. 2.
FIG. 4 is a perspective view of enlarged region A in FIG. 2 when a cross-section is viewed from a -Z-axis direction to a +Z-axis direction.
FIG. 5 is a cross-sectional enlarged view of an insulation rib part in FIG. 4.
FIGS. 6A and 6B are views illustrating creepage distances on the insulation ribs.

### [Mode for Invention]

Hereinafter, several exemplary embodiments of the present application will be described in detail with reference to the accompanying drawings so that those with ordinary skill in the art to which the present application pertains may easily carry out the exemplary embodiments. The present application may be implemented in various different ways and is not limited to the embodiments described herein.

A part irrelevant to the description will be omitted to clearly describe the present application, and the same or similar constituent elements will be designated by the same reference numerals throughout the specification.

In addition, a size and thickness of each constituent element illustrated in the drawings are arbitrarily shown for convenience of description, but the present application is not limited thereto. In order to clearly describe several layers and regions, thicknesses thereof are enlarged in the drawings. In the drawings, the thicknesses of some layers and regions are exaggerated for convenience of description.

In addition, throughout the specification of the present application, unless explicitly described to the contrary, the word "comprise" or "include" and variations, such as "comprises", "comprising", "includes" or "including", will be understood to imply the inclusion of stated constituent elements, not the exclusion of any other constituent elements.

In addition, throughout the specification, the phrase "in a plan view" means when an object is viewed from above, and the phrase "in a cross-sectional view" means when a cross section made by vertically cutting an object is viewed from a lateral side.

Hereinafter, a battery module according to an embodiment of the present disclosure will be described with reference to the drawings.

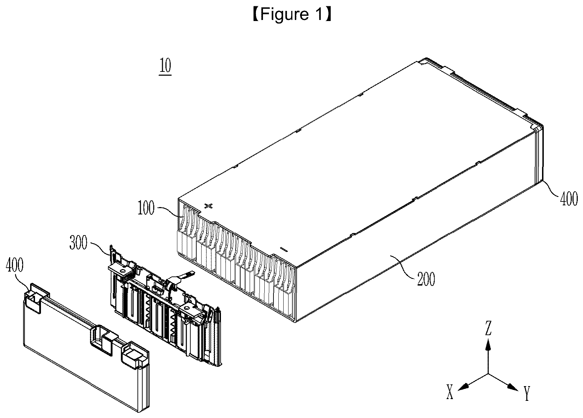

FIG. 1 is an exploded perspective view illustrating a battery module according to an embodiment of the present disclosure.

With reference to FIG. 1, a battery module 10 according to the present embodiment includes a battery cell stack 100 configured by stacking a plurality of battery cells, a module frame 200 configured to accommodate the battery cell stack 100, and endplates 400. In addition, the battery module 10 includes a busbar frame 300 positioned on at least any one surface of the battery cell stack 100.

For example, the module frame 200 may have a quadrangular mono-frame shape that surrounds upper, lower, and lateral surfaces of the battery cell stack 100. However, the module frame 200 is not limited thereto. The module frame 200 may include an upper plate configured to cover an upper side of the battery cell stack 100, and a U-shaped frame opened at an upper side, a front side, and a rear side. The module frame 200 may be substituted with a frame with another shape such as a shape in which a lower plate is coupled to an inverted U-shaped frame opened at a lower side, a front side, and a rear side. The module frame 200 may include a metallic material having a predetermined strength in order to protect the battery cell stack 100, the busbar frame 300, and other electrical components from the outside.

The plurality of battery cells, which constitutes the battery cell stack 100, may be pouch-type battery cells. However, the present disclosure is not limited thereto. Battery cells with various shapes may be applied. The plurality of battery cells may be stacked to be electrically connected to one another, thereby constituting the battery cell stack 100. For example, as illustrated in FIG. 1, the plurality of battery cells may be stacked in a direction parallel to a y-axis. Therefore, electrode leads may respectively protrude in an x-axis direction and a -x-axis direction. The busbar frames 300 may be positioned on two opposite surfaces of the battery cell stack 100 based on the directions in which the electrode leads protrude. That is, the busbar frame 300 may be respectively positioned on a front surface (a surface based on the x-axis direction) and a rear surface (a surface based on the -x-axis direction) of the battery cell stack 100. However, this is an exemplary arrangement. The position of the busbar frame 300 is not limited thereto, and the busbar frame 300 may be disposed to cover another side of the battery cell stack 100. That is, the arrangement is not specially limited, and the busbar frame 300 may be appropriately changed correspondingly as long as the busbar frame 300 enables the electrical connection between the electrode leads and the busbar in accordance with the directions in which the electrode leads protrude.

The endplate 400 is provided outside the busbar frame 300. The endplate 400 may have a battery module mounting structure capable of protecting the busbar frame 300 and several electrical components connected to the busbar frame 300 from an external impact and mounting the battery module 10 in a battery pack. Among busbars 310, a terminal busbar protrudes to the outside through an opening portion or the like formed in the endplate 400, such that the electrical connection between the busbar frame 300 and an external power source may be guided.

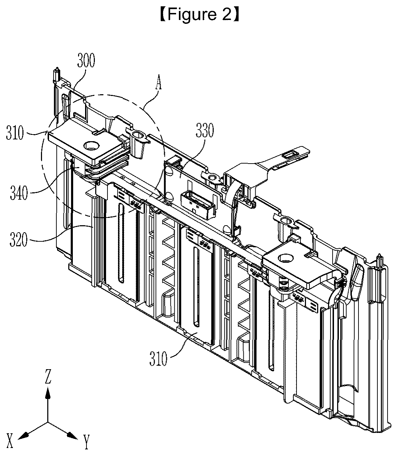

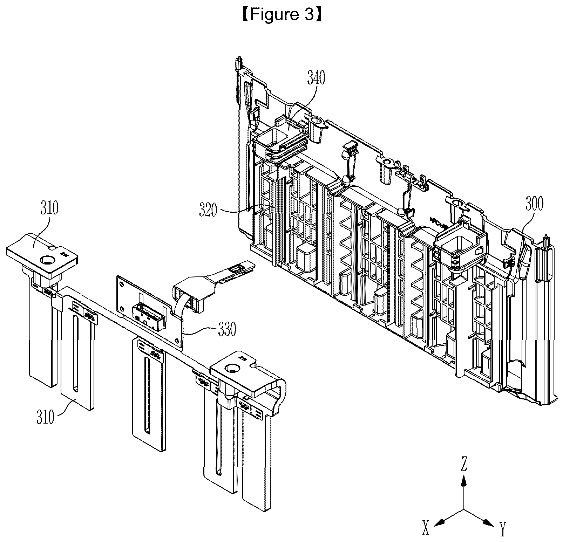

Hereinafter, the busbar frame 300 and the components coupled to the busbar frame 300 will be described in more detail with reference to FIGS. 2 and 3.

FIG. 2 is a view illustrating the busbar frame on which the busbar of the battery module in FIG. 1 is mounted, and FIG. 3 is an exploded perspective view of FIG. 2.

With reference to FIGS. 2 and 3, the plurality of busbars 310 may be mounted on one surface of the busbar frame 300. In this case, a surface on which the busbar 310 is mounted may be an opposing surface, i.e., an outer surface facing the battery cell stack 100. As illustrated in FIG. 1, in a state in which the busbar 310 is mounted, the endplate 400 may be coupled to the surface on which the busbar 310 is mounted.

The busbars 310 may include the busbar configured to implement the electrical connection in the module, and the terminal busbar configured to implement the electrical connection with external components. For example, in FIG. 2, the busbar, which is disposed at an outermost side based on the y-axis direction and has a shape bent upward, may be the terminal busbar. The bent upper portion of the terminal busbar may have a hole into which a bolt or the like may be inserted to implement the electrical connection with the outside. A nut mounting chamber 340, in which a nut or the like coupled to the corresponding bolt may be mounted, may protrude from the busbar frame 300. The upper portion of the terminal busbar with a bent shape may be coupled to be disposed on an upper portion of the nut mounting chamber 340. The nut mounting chamber 340 may be integrated with the busbar frame 300 by injection molding when the busbar frame 300 is formed.

In addition, a sensing assembly 330 may be mounted on the busbar frame 300. The sensing assembly 330 may include a module connector, a connection cable, a joining member, and the like. The sensing assembly 330 may be electrically connected to the battery cells through the busbar 310 and serve to control and transfer various types of information on the battery cells to an external battery management system (BMS).

An insulation rib 320 may be provided between the adjacent busbars 310 among the plurality of busbars 310. The insulation rib 320 may have a structure protruding in the x-axis direction while traversing between the busbars 310 from one surface of the busbar frame 300. The above-mentioned insulation rib 320 protruding in the x-axis direction may be elongated in a longitudinal direction, i.e., a z-axis direction of the busbar 310 and insulate a portion between the busbars 310 in most regions corresponding to a length of the busbar 310. That is, the insulation rib 320 may block unnecessary electrical connection between the adjacent busbars 310 and maintain the insulation. In particular, a protruding length (a length in the x-axis direction) of the insulation rib 320 may be larger than a thickness of the busbar 310. Therefore, it is possible to ensure sufficient insulation performance between the busbars 310. Further, the insulation rib 320 may be integrated with the busbar frame 300 by injection molding when the busbar frame 300 is formed.

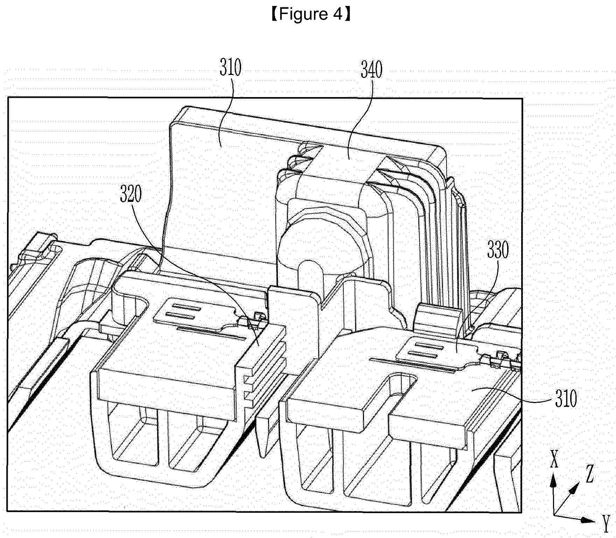

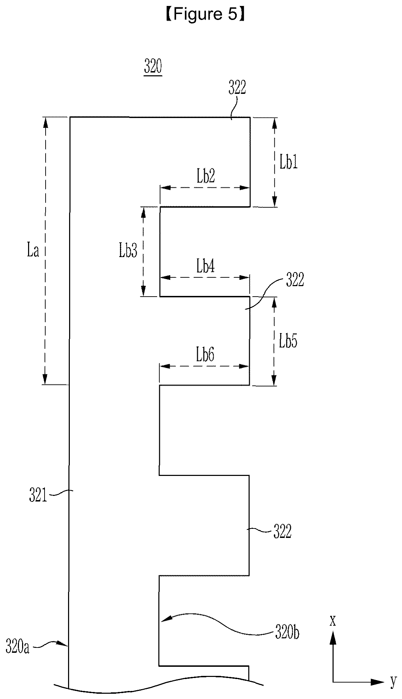

Hereinafter, with reference to FIGS. 4 and 5, particularly, the insulation rib 320 of the battery module according to the present embodiment will be described more specifically.

FIG. 4 is a perspective view of enlarged region A in FIG. 2 when a cross-section is viewed from the -Z-axis direction to the +Z-axis direction, and FIG. 5 is a cross-sectional enlarged view of an insulation rib part in FIG. 4.

As illustrated in FIGS. 4 and 5, the insulation rib 320 includes a main body rib 321 protruding outward, i.e., in the x-axis direction from one surface of the busbar frame 300, and a plurality of protruding portions 322 protruding toward the adjacent busbar 310, i.e., in the y-axis direction from one surface 320b of the main body rib 321. The plurality of protruding portions 322 may be spaced apart from one another and define a concave-convex structure as a whole. As described above, the concave-convex structure including the plurality of protruding portions 322 is provided, such that a creepage distance between the two busbars 310 adjacent to each other with the insulation rib 320 interposed therebetween may increase.

In this case, the creepage distance refers to a minimum distance along an insulator surface between two conductors. As the creepage distance increases, a movement distance by which one side conductor moves to the other side conductor through the insulator surface increases, such that the insulation performance may be improved.

The insulation rib 320 according to the embodiment of the present disclosure includes the plurality of protruding portions 322, which may increase the creepage distance between the busbars 310. In the present embodiment, the example has been described in which the protruding portions 322 are formed only on one of the two opposite surfaces of the insulation rib 320. However, the present disclosure is not limited thereto. The protruding portions 322 may be formed on both surfaces, or the protruding portion 322 may be formed only on a surface opposite to the surface illustrated in the drawings. However, the present disclosure is not specially limited thereto. A position, a size, and the like of the insulation rib 320 may vary depending on the specifications of the device. Positions, sizes, and the like of the protruding portions 322 may be differently designed depending on the design structure. However, even in this case, an overall width of the insulation rib 320 including the protruding amount of the protruding portion 322, i.e., a width of the insulation rib 320 in the x-axis direction in the drawings needs to be designed to be smaller than a spacing distance between the two adjacent busbars 310. A case in which the width of the insulation rib 320 is too large is not preferable because interference occurs during a process of assembling the busbar 310 to the busbar frame 300.

In addition, in the present embodiment, the example has been described in which the insulation rib 320 is disposed between the busbar 310, which is the terminal busbar, and the busbar 310 positioned inward. However, the present disclosure is not limited thereto. The insulation rib 320 may be disposed between the busbars 310 positioned inward. However, the insulation rib 320 may be essentially disposed at a position adjacent to the terminal busbar that requires higher insulation performance.

Meanwhile, as illustrated in FIG. 5, the plurality of protruding portions 322 may be provided, such that the creepage distance, which is lengthened by about two or more times, may be ensured in comparison with the surface on which the protruding portion 322 is not provided. For example, all the widths and depths of the protruding portions 322 on a surface 320a on which the protruding portion 322 is not provided and a surface 320b on which the protruding portion 322 is provided are equal to one another (i.e., Lb1=Lb2=Lb3=Lb4=Lb5=Lb6), the creepage distance of the surface 320b, on which the protruding portion 322 is provided, increases to be about two times longer than a length La of a cross-section of the corresponding surface 320a. However, this configuration is merely an example. The amount of increase in creepage distance may be adjusted by changing the widths, the depth, and the number of protruding portions 322. Even in this case, the creepage distance increased to ensure stable insulation performance may be two or more times.

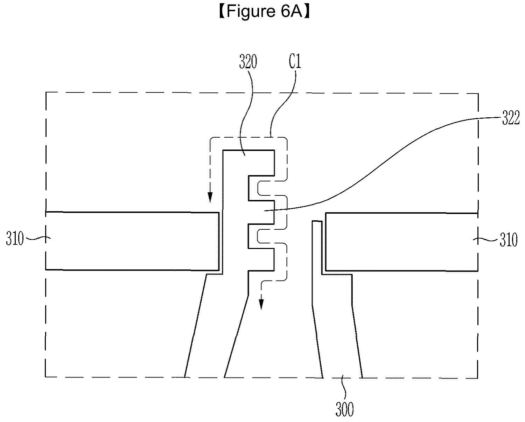

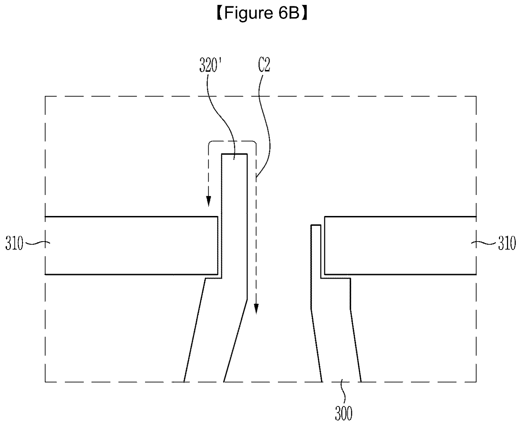

Next, a difference in creepage distance in accordance with whether the protruding portion is formed will be described more specifically with reference to FIGS. 6A and 6B.

FIGS. 6A and 6B are views illustrating creepage distances of insulation ribs according to the embodiment of the present disclosure and a comparative example.

As illustrated in FIG. 6A, it can be seen that the insulation rib 320 of the present embodiment having the protruding portion 322 may have a creepage distance C1 longer than a creepage distance C2 of an insulation rib 320' in FIG. 6B in which no protruding portion is included. In particular, even though the creepage distance increases to a large degree as described above, a space between the busbars 310 is not substantially changed, and a space occupied by the insulation rib 320 does not greatly increase. Therefore, according to the present embodiment, it can be seen that the creepage distance may be efficiently increased even in a narrow space, and the stable insulation performance may be ensured.

The above-mentioned battery module may be included in a battery pack. The battery pack may be a structure made by packing one or more battery modules according to the present embodiment while adding a cooling device, a battery management system (BMS), which manages a temperature or voltage of the battery, and the like.

The battery pack may be applied to various devices. Examples of such devices may include transportation means such as an electric bicycle, an electric vehicle, and a hybrid vehicle, but the present disclosure is not limited thereto, and may be applied to various devices that may use the battery module and the battery pack including the battery module. These configurations may also belong to the scope of the present disclosure.

Although preferred examples of the present disclosure have been described in detail hereinabove, the right scope of the present disclosure is not limited thereto, and many variations and modifications of those skilled in the art using the basic concept of the present disclosure, which is defined in the following claims, will also belong to the right scope of the present disclosure.

### [Description of Reference Numerals]

10: Battery module
100: Battery cell stack
200: Module frame
300: Busbar frame
310: Busbar
320: Insulation rib
322: Protruding portion
330: Sensing assembly
340: Nut mounting chamber
400: Endplate

## Claims

1. A battery module comprising:
a battery cell stack including a plurality of battery cells;
a busbar frame located on at least one surface of the battery cell stack; and
at least two busbars located on the busbar frame,
wherein the busbar frame comprises at least one insulation rib protruding between a first busbar of the at least two busbars and an adjacent second busbar of the at least two busbars, and
wherein the at least one insulation rib comprises a plurality of protruding portions, the plurality of protruding portions being located on a first surface of the busbar frame, the first surface facing away from the first busbar, and the plurality of protruding portions protruding toward the second busbar .

2. The battery module of claim 1, wherein the busbar frame is made of an insulating material, and
wherein the at least one insulation rib is integrated with the busbar frame by injection molding.

3. The battery module of claim 1, wherein a direction in which the at least one insulation rib protrudes is a first direction perpendicular to the first surface of the busbar frame .

4. The battery module of claim 3, wherein the plurality of protruding portions protrude in a second direction perpendicular to the first direction and parallel to the first surface of the busbar frame.

5. The battery module of claim 1, wherein at least one of the at least one insulation rib is located adjacent to the first busbar located at an outermost side of the busbar frame among the at least two busbars mounted on the busbar frame.

6. The battery module of claim 1, wherein a creepage distance of the first surface of the busbar frame on which the plurality of protruding portions are located is two or more times a creepage distance of a surface on which the plurality of protruding portions are not located.

7. The battery module of claim 1, wherein a length by which the at least one insulation rib protrudes is longer than a thickness of each of the at least two busbars in a direction in which the at least one insulation rib protrudes.

8. The battery module of claim 1, wherein the plurality of protruding portions are spaced apart from one another to define a concave-convex structure.

9. The battery module of claim 1, wherein a maximum width of the at least one insulation rib comprising the plurality of protruding portions is smaller than a spacing distance between the first busbar and the second busbar.

10. A battery pack comprising the battery module according to claim 1.
